Europäisches Patentamt

European Patent Office

Office européen des brevets

(11) Numéro de publication: **0 064 907**
A1

## (12) DEMANDE DE BREVET EUROPEEN

(21) Numéro de dépôt: 82400740.5

(22) Date de dépôt: 27.04.82

(51) Int. Cl.³: **B 63 H 9/10**
B 63 B 35/72, F 16 H 25/20

(30) Priorité: 04.05.81 FR 8108769

(43) Date de publication de la demande:
17.11.82 Bulletin 82/46

(84) Etats contractants désignés:
BE CH DE FR GB IT LI NL

(71) Demandeur: Maurras, Jean-François
35 Hameau de la Jonque
F-91650 Brueillet(FR)

(72) Inventeur: Maurras, Jean-François
35 Hameau de la Jonque
F-91650 Brueillet(FR)

(54) Dispositif pour le réglage de la voile d'une planche à voile.

(57) Dispositif permettant, en navigation, différents réglages de la voile d'une planche à voile. Il consiste en des poignées (6) montées de façon à pouvoir tourner sur le wishbone sous l'action du planchiste. Ces poignées sont reliées à la voile par une pièce de liaison (7) et comportent des moyens, coopérant avec des moyens dont est muni le wishbone, pour transformer le mouvement de rotation conféré aux poignées en un mouvement de translation imprimé par exemple, au point d'écoute.

Fig. 1

EP 0 064 907 A1

- 1 -

## Dispositif pour le réglage de la voile
## d'une planche à voile

La présente invention concerne le gréement des planches à voile et elle a pour objet un dispositif permettant au planchiste de régler, en navigation, la position du point d'écoute de la voile sur le wishbone.

Dans les gréements connus, la liaison du point d'écoute est réalisée au moyen d'un bout qui est fixé sur le wishbone, par exemple au moyen d'un taquet coinceur, ce qui exclut la possibilité, pour le planchiste, d'un réglage quelconque de l'écoute en navigation.

Or, le creux de la voile étant sous la dépendance, notamment de la position du point d'écoute, il est du plus haut intérêt, pour obtenir un rendement aérodynamique optimal de la voile, de modifier ce creux, en fonction des modifications de la force relative du vent et également lors de changements d'allure.

C'est ce que permet de réaliser le dispositif suivant l'invention.

Ce dispositif consiste essentiellement en des poignées montées sur le wishbone de façon à pouvoir tourner autour du cadre tubulaire qui constitue le wishbone, qui sont reliées à la voile et qui comportent des moyens, coopérant avec des moyens que comporte le wishbone pour transformer leur mouvement de rotation en un mouvement de translation.

En agissant sur ces poignées, le planchiste modifie la position du point d'écoute par rapport au wishbone, donc donne à la voile, en raidissant ou en mollissant son point d'écoute, plus ou moins de creux, ce qui permet d'atteindre le but recherché.

Les divers caractéristiques et avantages de l'invention ressortiront de la description qui va suivre, de quelques unes de ses formes possibles de réalisation, étant entendu qu'il s'agit uniquement d'exemples non limitatifs, toutes autres dispositions pouvant être adoptées sans sortir du cadre de l'invention.

Au cours de cette description on se réfère au dessin ci-joint sur lequel :

La Fig. 1 est une vue schématique en plan d'un wishbone muni d'un dispositif suivant l'invention.

La Fig. 2 est une vue extérieure à plus grande échelle de ce dispositif.

La Fig. 3 et 4 sont des vues en coupe longitudinale de deux formes de réalisation de ce dispositif.

La voile 1 de la planche (non représentée), est comme connu, enfilée sur le mat 2 qui est lui-même amarré sur le wishbone 3.

Conformément à l'invention le point d'écoute 4 qui est habituellement fixé sur le wishbone par l'intermédiaire d'un palan et saisi au moyen de taquets coinceurs, ou analogues, est, par l'intermédiaire d'un palan 5 dans l'exemple choisi, relié à deux poignées 6, disposées de façon sysmétrique sur le wishbone et montées sur ce dernier de façon à pouvoir tourner.

Chacune des poignées 6 est reliée au brin libre 5a correspondant du palan 5 par une pièce de liaison 7.

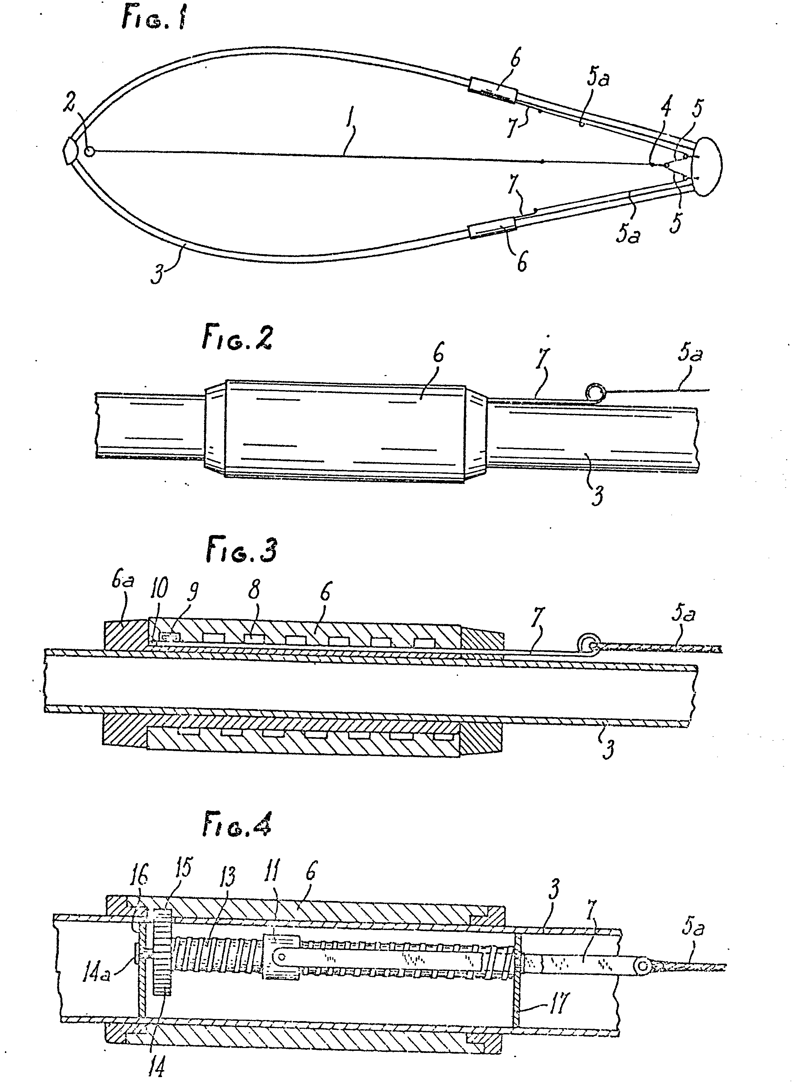

Suivant une première forme de réalisation, représentée à la Fig. 3 les poignées 6 sont montées sur le wishbone par l'intermédiaire d'un support 6a, de façon à pouvoir tourner autour du wishbone et à faire prendre à la pièce de liaison 7 un mouvement de translation, de la manière suivante :

La poignée présente un taraudage hélicoïdal 8 avec lequel est en prise un ergot 9 dont est munie la pièce de liaison 7, laquelle, pour éviter sa mise en rotation et celle de l'ergot 9, se déplace dans une glissière 10 ménagée dans le support 6a.

Dans ces conditions, toute rotation imprimée aux poignées 6 se traduira par un déplacement longitudinal de la pièce 7 entraînant le brin 5 a du palan et amènera une modification de la position du point d'écoute.

Grâce aux dispositions suivant l'invention le planchiste en faisant tourner une poignée 6 pourra donc à volonté modifier en définitive le creux de la voile.

L'emplacement des poignées est choisi pour être au voisinage de l'emplacement normal des mains du planchiste sur le wishbone.

Le pas de l'hélice que présente le taraudage interne de chaque poignée est choisi de façon à s'opposer à la résersibilité du mouvement et ainsi conserver au point d'écoute la position voulue à un moment donné. On peut également prévoir, pour bloquer les poignées dans la position voulue, tout moyen quelconque convenable, tel que cliquet ou l'équivalent.

D'autre part, la présence du palan 5 permet de modifier de façon significative la position du point d'écoute même en ne faisant tourner les poignées que d'une faible quantité.

Dans l'exemple de réalisation traité à la Fig. 4, la pièce de liaison 7 est en forme d'étrier et est solidaire d'un écrou 11 en prise avec une vis 13 excentrée par rapport à l'axe du wishbone et entraînée en rotation grâce à une roue dentée 14 coopérant avec une denture interne 15 pratiquée dans la poignée 6 à travers une fenêtre pratiquée dans le wishbone. La pièce de liaison 7 en forme d'étrier passe dans deux ouvertures, ménagées dans un flasque 17, prévu dans le wishbone. L'écrou 11 est empêché de tourner grâce au guidage de la pièce de liaison 7 par les ouvertures que présente le flasque 17. La roue 14 tourbillonne par son axe 14a sur un flasque 16 également prévu dans le wishbone.

Toute autre disposition pourrait être adoptée sans sortir du cadre de l'invention.

En toute hypothèse le but recherché est bien atteint à l'aide de moyens simples, aussi faciles à réaliser qu'à utiliser par le planchiste, permettant à ce dernier, en navigation, de tirer de sa voilure le rendement aérodynamique optimum.

Revendications de Brevet

1 - Dispositif permettant, en navigation, différents réglagles de la voile d'une planche à voile, caractérisé en ce qu'il consiste en des poignées, montées sur le wishbone, de façon à pouvoir tourner sous l'action du planchiste, autour du cadre tubulaire qui constitue le wishbone, poignées qui sont reliées à la voile et qui comportent des moyens, coopérant avec des moyens dont est muni le wishbone, pour transformer le mouvement de rotation conféré aux poignées, en un mouvement de translation.

2 - Dispositif suivant la revendication 1, caractérisé en ce que les poignées sont reliées au point d'écoute de la voile par un palan.

3 - Dispositif suivant l'une quelconque des revendications précédentes, caractérisé en ce que chaque poignée (6) présente un taraudage hélicoïdal (8) avec lequel est en prise une saillie (9) dont est munie une pièce (7) assurant la liaison avec le point d'écoute, pièce qui se déplace dans une glissière (10) ménagée dans un support (6a) que présente la poignée.

4 - Dispositif suivant la revendication 3 caractérisé en ce que le pas du taraudage hélicoïdal (8) est choisi de façon à empêcher la réversibilité du mouvement de la poignée.

5 - Dispositif suivant l'une quelconque des revendications précédentes caractérisé en ce que la pièce (7) de liaison avec le point d'écoute est solidaire d'un écrou (11) en prise sur une vis (13) dont l'axe excentré par rapport à l'axe du wishbone est solidaire d'un pignon ou roue dentée (14) engrènant avec une denture (15) prévue dans la poignée (6) à travers une fenêtre pratiquée dans le wishbone.

6 - Dispositif suivant la revendication 5 caractérisé en ce que le pignon ou la roue dentée, tourillonne dans un flasque (16) que présente le wishbone.

7 - Dispositif suivant la revendication (5) caractérisé en ce que la pièce de liaison (7) est en forme d'étrier et passe dans des ouvertures pratiquées dans un flasque (17) prévu dans le wishbone, ce qui assure entre autres le guidage de l'écrou (11).

Fig. 1

Fig. 2

Fig. 3

Fig. 4

**0064907**

Office européen
des brevets

**RAPPORT DE RECHERCHE EUROPEENNE**

Numéro de la demande

EP 82 40 0740

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A,P | EP-A-0 039 927 (SCHWEITZER) *Page 2, ligne 9 - page 3, ligne 7; page 7, lignes 7-20; figures 1,4* | 1 | B 63 H 9/10 B 63 B 35/72 F 16 H 25/20 |
| A | EP-A-0 021 447 (NIESCHLER) *Page 13, lignes 9-37; figure 8* | 1,2 | |
| A | FR-A-2 411 126 (MARKER) *Page 6, ligne 31 - page 7, ligne 13; figure 5* | 1 | |
| A | FR-A- 602 735 (BOUR) | | |
| A | FR-A-2 202 808 (MITSUI SHIPBUILDING AND ENGINEERING CO LTD) | | |

DOMAINES TECHNIQUES RECHERCHES (Int. Cl. ³)

B 63 B

Le présent rapport de recherche a été établi pour toutes les revendications

| Lieu de la recherche | Date d'achèvement de la recherche | Examinateur |
|---|---|---|
| LA HAYE | 13-08-1982 | WENZEL A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant